Europäisches Patentamt

European Patent Office

Office européen des brevets

(11) Numéro de publication : **0 434 612 A1**

(12) # DEMANDE DE BREVET EUROPEEN

(21) Numéro de dépôt : **90810944.0**

(22) Date de dépôt : **04.12.90**

(51) Int. Cl.$^5$ : **A47J 42/40, A47J 42/44**

(30) Priorité : **21.12.89 CH 4577/89**

(43) Date de publication de la demande :
**26.06.91 Bulletin 91/26**

(84) Etats contractants désignés :
**DE ES FR IT**

(71) Demandeur : **ARMELLIN S.A.**
**Chemin de la Tuilière**
**CH-1052 Le Mont s/Lausanne (CH)**

(72) Inventeur : **Armelllin, Hermes**
**Chemin du Boisy, 0**
**CH-1004 Lausanne (CH)**

(74) Mandataire : **Meylan, Robert Maurice et al**
**c/o BUGNION S.A. 10, route de Florissant**
**Case Postale 375**
**CH-1211 Genève 12 - Champel (CH)**

(54) **Dispositif de distribution de café moulu.**

(57)  Il est destiné à équiper un moulin à café. Il comprend deux chambres juxtaposées (2, 3) chacune étant destinée à contenir au moins une dose de café moulu. La paroi latérale de chaque chambre (2, 3) est munie d'une ouverture pour l'alimentation de la chambre avec du café moulu, tandis que le fond (6, 7) est monté pivotant sur un axe au moins approximativement horizontal. Des moyens (14, 15) sont prévus pour maintenir et rappeler le fond en une position de repos et de fermeture de la chambre. D'autres moyens commandent l'ouverture du fond (16 à 25) pour laisser tomber le café moulu se trouvant dans la chambre.

Fig. 1

EP 0 434 612 A1

# DISPOSITIF DE DISTRIBUTION DE CAFE MOULU

La présente invention concerne un dispositif de distribution de café moulu destiné à équiper un moulin à café.

La réussite d'un bon café du type "espresso", notamment en ce qui concerne son arôme et son goût, dépend de plusieurs facteurs et nous en citerons quelques uns : l'origine et la qualité des grains de café, la torréfaction, la fraîcheur, le degré de mouture, la température de l'eau utilisée dans une machine du type "espresso", la pression de la pompe envoyant l'eau chaude à travers le café et enfin la quantité de café utilisé par dose de café et la fraîcheur de sa mouture, c'est-à-dire qu'une quantité de café moulu est utilisée le plus rapidement possible pour éviter la perte de son arôme.

L'utilisateur final, à savoir le responsable d'un établissement offrant à ses consomateurs du café, après avoir choisi son fournisseur de café torréfié et choisi une installation de qualité pour la confection d'une tasse de café ne peut intervenir de manière efficace que sur les deux derniers facteurs, à savoir la fraîcheur de la mouture et la quantité de café utilisé pour la confection d'une tasse de café. Habituellement dans de tels établissements à côté de la machine pour la confection de boissons chaudes, plus particulièrement de café, se trouve un moulin à café présentant en principe un réservoir contenant les grains de café au-dessus d'un moulin qui moud et envoie le café moulu dans un autre récipient muni d'un dispositif de dosage. Le dispositif de dosage est formé d'un récipient cylindrique à l'intérieur duquel est fixé un axe cylindrique prolongé par des parois radiales venant jusqu'à proximité de la paroi intérieure du récipient, le secteur entre deux parois radiales consécutives étant destiné à contenir une dose de café moulu. Cette pièce est actionnée par une manette faisant tourner autour de l'axe cylindrique la pièce et poussant la dose de café se trouvant entre deux parois au-dessus d'un trou laissant tomber la dose dans un dispositif (porte-filtre et filtre) qui est ensuite utilisé sur la machine à café. Ce dispositif de dosage utilisé couramment dans les établissements précités, présente un certain nombre d'inconvénients :

– une quantité de café moulu relativement importante doit être en permanence présente dans le récipient du dispositif de dosage afin que la quantité de café se trouvant entre deux parois radiales soit au moins approximativement la même pour chaque dose, ce qui a pour conséquence que du café moulu peut rester longtemps dans le doseur sans être utilisé.

– La quantité de café utilisé pour la confection de deux tasses de café en utilisant le même porte-filtre est exactement le double de la quantité de café utilisé pour confectionner un simple café ce qui n'est pas intéressant au point de vue économique voire même de goût, car il s'avère que la quantité de café nécessaire pour faire deux bons cafés peut être légèrement inférieure au double de la quantité nécessaire pour confectionner un seul café.

– Il arrive fréquemment que la quantité de café contenue entre deux parois radiales n'est pas quantité souhaitée et lorsque l'utilisateur s'apperçoit que la quantité est insuffisante il ajoute une petite quantité en actionnant légèrement ledit levier distributeur et ceci au préjudice de la dose restante entre les deux parois pour le prochain café qui soit ne sera pas bon, soit l'utilisateur, s'il s'apperçoit que la quantité est insuffisante, il prélèvera une quantité plus importante sur la dose suivante et ainsi de suite, le dipositif de dosage manquant ainsi de précision.

– Lorsque le récipient contenant le café moulu est vide, il faut actionner le moulin et attendre quelque fois plusieurs minutes pour obtenir du café moulu en quantité suffisante pour la dose contenue dans chaque secteur soit correcte avant de pouvoir confectionner le café. Cette perte de temps, même de quelques minutes a une influence négative sur le travail des personnes chargées de la confection des cafés, notamment aux heures de pointe.

La présente invention a pour but de pallier les inconvénients susmentionnés.

Le dispositif de distribution de café selon l'invention est caractérisé par le fait qu'il comprend deux chambres juxtaposées chacune étant destinée à contenir au moins une dose de café moulu, que la paroi latérale de chaque chambre est munie d'une ouverture pour l'alimentation de la chambre avec du café moulu, que son fond est monté pivotant sur un axe au moins approximativement horizontal, que le dispositif est muni de moyens pour maintenir et rappeler ledit fond de chaque chambre en une position de repos et de fermeture de ladite chambre ainsi que des moyens commandant l'ouverture dudit fond par pivotement autour du dudit axe pour laisser tomber le café moulu se trouvant dans ladite chambre.

Les avantages de la présente invention sont les suivants :

La quantité de café moulu en attente se limite en principe à deux doses, chaque chambre contenant de préférence une dose de café.

La quantité de café pour la confection simultanée de deux cafés est inférieure au double d'une simple dose puisque l'on peut prévoir que l'une des chambres, celle qui s'ouvre uniquement lorque deux cafés doivent être confectionnés et simultanément avec l'autre présente un volume inférieure à celui de l'autre chambre qui est utilisée lors de la confection d'un simple café.

Selon une exécution, l'une des parois de chaque chambre est déplaçable permettant ainsi de varier le volume intérieur de la chambre et par conséquent régler la quantité de café qui s'y trouve, ce qui présente l'avantage de pouvoir régler la quantité de café moulu contenu dans chaque chambre en fonction du résultat désiré et également de la qualité et d'origine du café en grain.

Selon une exécution préférée, chaque chambre comprend un dispositif de détection de la présence de la dose de café dans la chambre permettant de commander la mise en route et l'arrêt du moulin à café de sorte que chaque chambre soit toujours remplie. De cette manière il n'y a pas de temps mort en attendant la mouture du café, et le remplissage des deux chambres se fait très rapidement étant donné que la quantité de café moulu nécessaire pour deux doses peut être obtenue très rapidement.

Selon une exécution, le fond de chaque chambre est muni de moyens s'étendant jusqu'à la paroi opposée de la chambre et par la suite parallèlement à celle-ci afin de permettre, lors du pivotement du fond, d'entraîner la quantité de café se trouvant dans la chambre qui pourrait éventuellement être collée contre la paroi supérieure voire les parois latérales. En réalité, ces moyens sont des tiges de fil de fer ou similaires en forme de L fixées par l'une de leurs extrémités sur le fond de la chambre pour pivoter avec ledit fond et entraîner la dose de café vers le bas.

Les moyens assurant la fermeture et le rappel du fond de chaque chambre sont constitués de préférence par un ou deux ressorts à lame ou des ressorts hélicoïdaux et les moyens commandant le pivotement et l'ouverture de chaque chambre sont constitués d'un dispositif électromagnétique actionné par une impulsion électrique de courte durée. Il s'agit de préférence, d'un életro-aimant à entrefer variable, dont l'armature est une pièce mobile oblongue agissant sur le fond pour le faire pivoter. Ce dispositif est, donc, actionné par une impulsion électrique qui provoque le déplacement de l'armature et partant l'ouverture du fond pour laisser tomber le café et dès que l'impulsion disparait l'armature revient à sa position de repos sous l'influence de son propre poids tandis que le fond revient à sa position de repos sous l'action des moyens déformables élastiquement.

Selon une exécution préférée, afin que l'ouverture du fond se fasse aussi brutalement que possible pour que le café moulu soit éjecté de la chambre et pour qu'il ne reste pas collé sur les parois, l'armature est agencée de sorte à ne pas agir immédiatement sur le fond et le faire pivoter, mais uniquement lorsqu'elle a déjà parcouru une petite distance et a acquis une quantité de mouvement ayant vaincu sa propre inertie.

L'invention sera décrite plus en détail à l'aide du dessin annexé représentant les réalisations préférées de l'invention.

La figure 1 est une vue en élévation et partiellement en coupe du dispositif de distribution selon l'invention disposé au-dessus d'un entonnoir guidant le café moulu vers le filtre et le porte filtre.

La figure 2 est une vue en plan et partiellement en coupe de la figure précédente.

Le distributeur est formé d'une pièce moulée métallique 1 présentant principalement deux chambres 2 et 3 juxtaposées et séparées par une paroi 4. Les deux chambres dans le cas présent ont une forme de parallélépipède et elles sont ouvertes sur leur côté frontal pour permettre l'introduction du café moulu qui y est envoyé par un moulin à café non représenté disposé devant lesdites chambres. La paroi de séparation 4 présente une projection 5 facilitant le guidage du café dans les deux chambres. Le fond de chaque chambre, à savoir 6, respectivement 7 est monté pivotant autour d'un axe 8, respectivement 9 disposé au moins approximativement horizontalement. Chaque fond comporte une projection en forme d'étrier 10 et 11 dont les faces perpendiculaires à la direction de pivotement ont une forme triangulaire. Un des sommets des faces triangulaires est traversé par l'axe de pivotement, un deuxième sommet est traversé par une cheville 12, respectivement 13, agencé pour être assemblée à des ressorts 14 respectivement 15, donc la deuxième extrémité est solidaire d'une autre cheville 16, respectivement 17 solidaire de la pièce moulée 1. Lesdits ressorts 14, 15 assurent le maintien et le rappel des fonds en positions fermées. Enfin le troisième sommet est solidaire d'un axe 18 respectivement 19 dans lequel s'engage l'extrémité d'une biellette 20, respectivement 21 qui est articulée par son autre extrémité autour de la cheville 16, respectivement 17 citée précédemment. L'extrémité de chaque biellette 20, respectivement 21, se termine par deux bras entourant l'axe 18, respectivement 19.

Une pièce cylindrique métallique 22, respectivement 23 constitue l'armature d'un électro-aimant 24, respectivement 25 alimenté par des fils 26, respectivement 27 reliés à deux poussoirs non représentés. L'extrémité inférieure de l'armature 22, respectivement 23 se présente sous forme d'étrier entourant la biellette 20, respectivement 21 contre laquelle repose en position de repos. Les extrémités inférieures desdites armatures sont traversées par des chevilles 26, 27.

L'ouverture d'un fond est obtenue de la manière suivante, en appuyant sur l'un des boutons-poussoirs, l'un des électro-aimants reçoit une impulsion électrique qui a pour effet d'attirer l'armature 22 ou 23 vers le haut cette assension ayant pour effet que la cheville 26 ou 27 vient en contact avec la biellette 20 ou 21, la fait pivoter autour de la cheville 16 ou 17 ce qui a pour effet que l'extrémité de la biellette agit sur l'axe 18 ou 19 qui de son côté fait pivoter l'étrier 10 ou 11 autour de l'axe de pivotement 8 ou 9 provoquant le déplacement du fond 6 ou 7 à la position représentée en traits mixtes. On peut distinguer sur le dessin que la cheville 26 ou 27 avant d'entrer en contact avec la biellette 20 ou 21 doit parcourir un petit chemin ce qui lui permet d'acquérir une quantité de mouvement qui assure que l'ouverture du fond sera faite brutalement pour permettre d'éjecter le café moulu qui se trouve dans la chambre correspondante dns l'entonnoir E.

Dans une exécution l'un des boutons-poussoirs permet d'ouvrir l'une des chambres, par exemple la chambre 2, tandis que le deuxième bouton-poussoir permet d'ouverture de deux chambres simultanément lorsqu'il s'agit de confectionner deux cafés simultanément. Afin d'assister à l'éjection rapide et quasi complète de la quantité de café se trouvant dans les chambres, chaque fond est solidaire des tiges de fil de fer ou similaire 28 qui entraînent le café qui pourrait avoir tendance de rester collé contre les parois de la chambre.

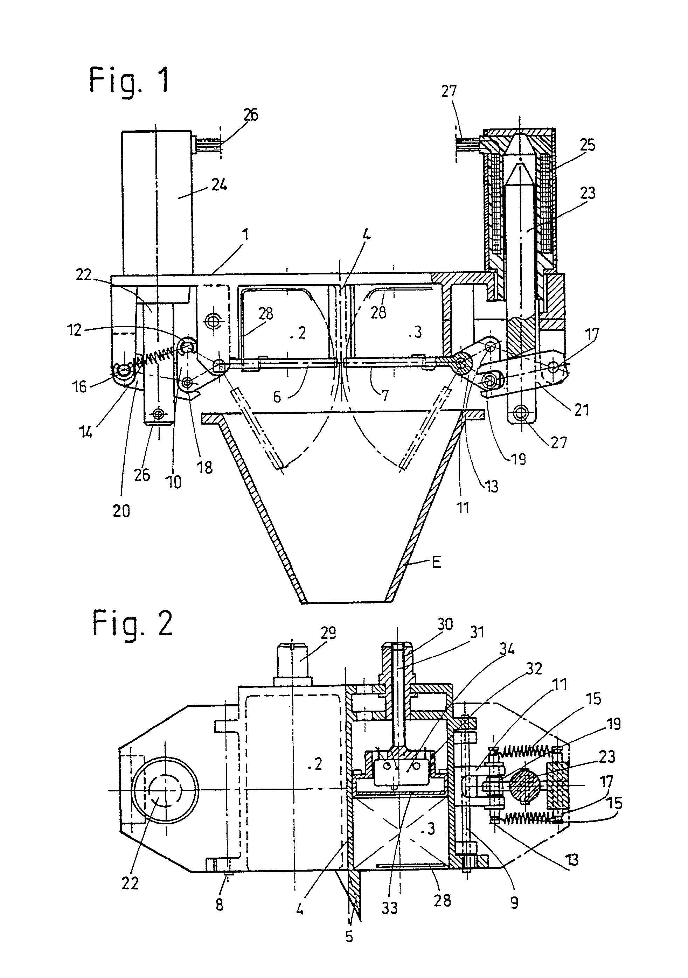

A la figure 2 et sur la partie droite nous avons représenté le dispositif permettant de faire varier le volume de chaque chambre afin de régler à volonté la quantité de café qui s'y trouve composé d'un écrous 29, respectivement 30 disposé sur la face postérieure du distributeur agissant sur une tige filetée 31 qui est solidaire d'un dispositif 32 déplaçable à l'intérieur de la chambre pour faire varier son volume. Le dispositif 32 est composé d'une paroi sous forme de membrane 33 derrière laquelle se trouve un dispositif 34 qui en réalité est un micro-interrupteur. Le rôle de ce micro-interrupteur extrêmement sensible est de détecter la présence de café dans chaque chambre. Ainsi, lorsqu'aucune pression ne s'exerce contre la membrane 33 et partant contre le micro-interrupteur 34, le moulin à café se met en marche pour que la chambre reçoit du café moulu. Si la pression exercée contre la membrane au fur et à mesure de l'accumulation du café dans la chambre atteint une valeur donnée, le micro-interrupteur provoque l'arrêt du moulin. Pour que le moulin ne fonctionne pas, il faut que les deux micro-interrupteurs, un par chambre, détectent la présence de café. Dès que l'un des deux détecte la non présence de café, le moulin est mis en route.

Ainsi après avoir éjecté une ou deux doses de café en agissant sur l'un des deux poussoirs (non représentés), le moulin est mis instantanément en route et les deux chambres ou la chambre qui a été vidée se remplit instantanément avec du café moulu, d'où la nécessité que le fond se referme rapidement pour que le café moulu arrivant reste dans la chambre.

En partant du principe que l'une des chambres est en permanence utilisée pour la confection d'un seul café tandis que la deuxième est utilisée uniquement lorsqu'on veut confectionner deux cafés simultanément, on peut régler en sorte que la quantité de café se trouvant dans la deuxième chambre est légèrement inférieure à celle se trouvant dans la première ainsi on respecte la condition que pour deux cafés confectionnés simultanément une quantité inférieure au double d'une dose simple est nécessaire.

Bien entendu on peut aussi prévoir que l'une des deux chambres contient deux doses de café et l'autre une seule en prévoyant en conséquence les connexions des boutons-poussoirs.

## Revendications

1. Dispositif de distribution de café moulu destiné à équiper un moulin à café, caractérisé par le fait qu'il comprend deux chambres juxtaposées chacune étant destinée à contenir au moins une dose de café moulu, que la paroi latérale de chaque chambre est munie d'une ouverture pour l'alimentation de la chambre avec du café moulu, que son fond est monté pivotant sur un axe au moins approximativement horizontal, que le dispositif est muni de moyens pour maintenir et rappeler ledit fond de chaque chambre en une position de repos et de fermeture de ladite chambre ainsi que des moyens commandant l'ouverture dudit fond par pivotement autour du dudit axe pour laisser tomber le café moulu se trouvant dans ladite chambre.

2. Dispositif selon la revendication 1, caractérisé par le fait que l'une des parois de chaque chambre est déplaçable pour permettre la variation de son volume intérieur et assurer un réglage de la quantité du café moulu contenu dans la chambre.

3. Dispositif selon l'une des revendications 1 ou 2, caractérisé par le fait que chaque chambre est munie d'un dispositif de détection de la présence du café dans la chambre et agencé pour commander la mise en route et l'arrêt du moulin à café de sorte que chaque chambre soit en permanence remplie avec du café moulu.

4. Dispositif selon l'une des revendications 1 à 3, caractérisé par le fait que les moyens maintenant et rappelant le fond en position de fermeture sont constitués de moyens déformables élastiquement.

5. Dispositif selon l'une des revendications 1 à 4, caractérisé par le fait que le fond de chaque chambre est solidaire de moyens s'étendant jusqu'à la paroi opposée et ensuite parallèlement à celle-ci pour assister à l'évacuation du café lors de l'ouverture du fond.

6. Dispositif selon l'une des revendications 1 à 5, caractérisé par le fait que les moyens commandant l'ouverture du fond de chaque chambre comprennent un dispositif électromagnétique actionné par une impulsion électrique de courte durée.

7. Dispositif selon la revendication 6, caractérisé par le fait que le dispositif électromécanique comprend un électro-aimant à entrefer variable et une amature mobile assurant le pivotement du fond de la chambre à partir de la position de repos.

8. Dispositif selon la revendication 7, caractérisé par le fait que l'armature est agencée pour commander le pivotement du fond après le début de son déplacement dans l'entrefer.

# Fig. 1

# Fig. 2

Office européen
des brevets

# RAPPORT DE RECHERCHE EUROPEENNE

Numero de la demande

EP 90 81 0944

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| X | FR-A-2301214 (ROSSI)<br>* le document en entier * | 1-3, 5-8 | A47J42/40<br>A47J42/44 |
| Y | | 4 | |
| Y | GB-A-2120534 (TOKYO SHIBAURA DENKI KABUSHIKI KAISHA)<br>* page 7, lignes 10 - 18; figure 11 * | 4 | |
| X | EP-A-0139964 (GESAMAT AG)<br>* le document en entier * | 1-6 | |
| Y | | 7, 8 | |
| Y | FR-A-2298997 (S.A.R.L. ETABLISSEMENTS UNIC)<br>* page 3, ligne 31 - page 5, ligne 18; figures * | 7, 8 | |
| A | | 1, 2, 6 | |
| A | US-A-2827845 (RICHESON)<br>* colonne 3, lignes 60 - 73; figure 1 * | 2 | |

DOMAINES TECHNIQUES
RECHERCHES (Int. Cl.5 )

A47J

Le présent rapport a été établi pour toutes les revendications

| Lieu de la recherche | Date d'achèvement de la recherche | Examinateur |
|---|---|---|
| LA HAYE | 03 AVRIL 1991 | BODART P. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

.............................................................................

& : membre de la même famille, document correspondant

EPO FORM 1503 03.82 (P0402)